Europäisches Patentamt

European Patent Office

Office européen des brevets

(19)

(11) Veröffentlichungsnummer: **0 019 653**
**B1**

(12) **EUROPÄISCHE PATENTSCHRIFT**

(45) Veröffentlichungstag der Patentschrift:
27.07.83

(51) Int. Cl.³: **B 65 G 51/16**

(21) Anmeldenummer: **79102171.0**

(22) Anmeldetag: **29.06.79**

(54) Rohrpostanlage mit einer steuerbaren Förderluftversorgung.

(30) Priorität: **18.05.79 CH 4658/79**

(43) Veröffentlichungstag der Anmeldung:
**10.12.80 Patentblatt 80/25**

(45) Bekanntmachung des Hinweises auf die Patenterteilung:
**27.07.83 Patentblatt 83/30**

(84) Benannte Vertragsstaaten:
**AT BE DE FR GB IT LU NL SE**

(56) Entgegenhaltungen:
**CH-A-519 432**
**DD-A-40 839**
**DE-A-2 712 075**
**DE-B-2 038 740**
**DE-B-2 038 786**
**DE-C-1 122 454**
**Patents Abstracts of Japan Band 2, Nr. 123, 14.**
**Oktober 1978 Seite 3935 M 78**
**Patents Abstracts of Japan Band 2, Nr. 66, 19. Mai**
**1978, Seite 1218 M 78**

(73) Patentinhaber: **SIEMENS-ALBIS**
**AKTIENGESELLSCHAFT, EGA1/Verträge und Patente**
**Postfach, CH-8047 Zürich (CH)**

(72) Erfinder: **Krebs, Walter, Allmendstrasse 54,**
**CH-8154 Oberglatt (CH)**

## Rohrpostanlage mit einer steuerbaren Förderluftversorgung

Die vorliegende Erfindung betrifft eine Rohrpostanlage gemäß dem Oberbegriff des Anspruches 1.

Im Zuge allgemeiner Rationalisierungsbestrebungen erfreuen sich Rohrpostanlagen in den letzten Jahren einer ständig größer werdenden Verbreitung. So werden Rohrpostanlagen zum Botendienst in größeren Gebäuden, zur Beförderung von leicht zu beschädigendem Transportgut, beispielsweise Blutproben in Spitälern etc., eingesetzt. In Geldinstituten besteht der Trend zu offenen, zugänglichen Kundenschaltern. Der Bargeldbestand für die Schalter wird häufig zentral in einem gegen Raubüberfälle optimal abgesicherten Raum aufbewahrt. Diese Schalter sind über Rohrpostlinien mit der Zentralkasse verbunden.

Mit der Vielfalt von Einsatzmöglichkeiten sind die Anforderungen an eine derartige Anlage gestiegen. Häufig wird ein geräuscharmer Betrieb verlangt, oder bei zerbrechlichem Transportgut ist eine stoßfreie Beförderung Voraussetzung. In solchen Fällen darf eine bestimmte Fördergeschwindigkeit nicht überschritten werden. Diese Einschränkung steht jedoch einer wirtschaftlichen und rationellen Ausnutzung einer Rohrpostanlage entgegen, da eine möglichst hohe Beförderungsgeschwindigkeit angestrebt wird. Infolgedessen muß ein ein Kompromiß gefunden werden.

In vielen bekannten Anlagen wird der Druck des Fördermittels (Luft oder Gas) auf einem bestimmten Betrag konstant gehalten, der so gewählt ist, daß auch im ungünstigsten Fall eine maximal vorgegebene Transportgeschwindigkeit nicht überschritten wird. Ein bestimmter konstant gehaltener Druck der Förderluft bewirkt jedoch nicht bei allen Rohrpostbüchsen eine gleiche Transportgeschwindigkeit. Wird der Druck entsprechend einer Büchse mit minimal möglichem Zuladungsgewicht eingestellt, so erreichen die Büchsen mit größerem Zuladungsgewicht eine weniger hohe Transportgeschwindigkeit als eigentlich zulässig wäre. Die Verkehrsleistung der Anlage bleibt daher unter ihrem möglichen Wert.

In der deutschen Offenlegungsschrift 2 038 740 ist eine Rohrpostanlage beschrieben, bei welcher die Gebläseeinrichtung für die Förderluft mit einer Steuerschaltung verknüpft ist, die mittels manuell an den Rohrpoststationen und/oder durch in der Anlage zirkulierende Rohrpostbüchsen betätigbare Schalteinrichtungen hinsichtlich der Gebläseleistung beeinflußbar ist. Auf diese Weise sollen jeweils optimale Fördergeschwindigkeiten in den einzelnen Rohrabschnitten eingestellt werden können. Es ist ein entscheidender Nachteil dieser Anlage, daß die transportspezifischen Daten der Büchsen, wie beispielsweise ihr Gewicht und der Zustand der Gleitringe, völlig unberücksichtigt bleiben.

In der DE-B 2 038 786 ist eine Rohrpostanlage dargestellt, bei der die Förderluftgeschwindigkeit ständig überwacht und mittels einer das Gebläse steuernden Regeleinrichtung auf einen bestimmten Wert konstant gehalten wird. Auf diese Weise kann eine vorgegebene Büchsengeschwindigkeit eingehalten werden. Nachteilig bei dieser Methode ist allerdings, daß die gewünschte Büchsengeschwindigkeit nur über die Förderluftgeschwindigkeit und nicht direkt erfaßt wird.

Ferner ist in der DE-A 2 712 075 eine Rohrpostanlage beschrieben, bei der die Luftversorgungseinrichtung aufgrund der Ausgangsgröße einer das Gewicht einer Rohrpostbüchse erfassenden Steuereinrichtung geregelt wird. Nachteilig bei dieser Lösung ist die Tatsache, daß neben dem Gewicht keine weiteren büchsenspezifischen Parameter miterfaßt werden. Auch ist die Realisierung nicht unproblematisch. Falls nämlich die Wägevorrichtung in die Eingabestelle selbst integriert wird, ist deren Aufbau sehr heikel. Ist sie hingegen von der Eingabestelle getrennt aufgebaut, wird der Arbeitsablauf gestört, da die Büchse vor dem Einlegen in die Eingabestelle in einem zusätzlichem Arbeitsvorgang noch gewogen werden muß.

Ein besonders schwierig zu lösendes Problem wird durch die Forderung nach einer sanften und möglichst geräuschlosen Ausschleusung der Rohrpostbüchsen in den Empfangsstationen gestellt. Wird überhaupt keine Bremseinrichtung vorgesehen, so muß die gesamte kinetische Energie der ankommenden Büchse von einer Puffereinrichtung aufgefangen werden. Die Folge ist ein großer Materialverschleiß und eine starke Geräuschbildung. In verschiedenen Anlagen wird deshalb kurz vor Eintreffen der Büchse in der Empfangsstation der Druck der Förderluft beispielsweise durch Vorluftabnahme stark reduziert. Ist dieser reduzierte Druck, der im folgenden Ausschleusungsdruck genannt wird, für alle Büchsen gleich eingestellt, so hat dies zur Folge, daß eine schwere Büchse gemächlich in die Ausgabestelle hinausgleitet, während eine leichte Büchse geschoßartig an die Puffereinrichtung der Ausgabestelle prallt. Um dieses Problem zu umgehen, wird in der Schweizer Patentschrift 519 432 eine Anlage vorgeschlagen, die die Schwerkraft der Rohrpostbüchsen ausnützt. Die Büchsen gleiten in einer Gefällestrecke auf einem vor ihnen aufgebauten Luftpolster abwärts. Das Luftpolster wird dabei durch Vorbeiströmen von Luft an den Gleitringen abgebaut. Abgesehen davon, daß der Bremsvorgang bei leichten Büchsen einige Zeit in Anspruch nimmt, bedeutet die erforderliche Gefällestrecke eine Einschränkung bei der Projektierung. Beispielsweise bei inselartig verteilten Kundenschaltern in Geldinstituten wird deren Übersichtlichkeit und ästhetische Gestaltung durch derartige kaminförmige Rohrpostzuleitungen erheblich beeinträchtigt.

Es ist die Aufgabe der vorliegenden Erfindung, eine Rohrpostanlage zu schaffen, bei welcher die den Transport und/oder den Ausschleusungsvorgang beeinflussenden Einrichtungen derart gesteuert werden, daß die Rohrpostbüchsen vorgegebene Geschwindigkeiten möglichst genau einhalten und dadurch bei möglichst geräuscharmen und stoßfreiem Betrieb eine bestmöglichste Ausnützung der Anlage erreicht wird. Die Erfindung löst diese Aufgabe mit einer Anordnung, welche die im kennzeichnenden Teil des Anspruches 1 angegebenen Merkmale aufweist.

Auf die Büchse bezogenen Parameter betreffen einerseits Geschwindigkeit oder Beschleunigung der Büchsen und andererseits physikalische Parameter, welche bei einem bestimmten Druck der Förderluft die Geschwindigkeit und die Beschleunigung der Büchsen beeinflussen. Diese Parameter können in büchsenspezifische Daten, wie Gewicht der Büchse und Zustand der Gleitringe, und in rohrspezifische Daten, wie Neigung, Länge und Querschnitt des Fahrrohres unterschieden werden. Das Gewicht spielt vor allem eine Rolle bei den Beschleunigungsvorgängen und den zwischen den Gleitringen und dem Fahrrohr auftretenden Reibungskräften. Die Reibungskräfte werden durch das Material der Gleitringe und des Fahrrohres bestimmt.

Der Zustand der Gleitringe, welche in der Regel aus einer Art Filz bestehen, hat einen Einfluß auf den Wirkungsgrad des Antriebes. Bei stark abgenutzten Ringen ist die Abdichtung der Büchse im Fahrrohr herabgesetzt. Ein Teil der Luft strömt wirkungslos an den Gleitringen vorbei und es muß infolgedessen ein höherer Druck der Förderluft eingestellt werden als bei der Beförderung einer Büchse mit einwandfreien Gleitringen.

Die Neigung des Fahrrohres beeinflußt die Transportgeschwindigkeit. Bei gleicher Förderleistung wird in einem geneigten Rohr eine geringere bzw. größere Geschwindigkeit erreicht als in einem horizontal verlaufenden.

Beim Durchströmen der Förderluft durch das Transportrohr entstehen Druckverluste. Es sind Rohrpostanlagen denkbar, welche eine Vielzahl von Stationen und Verzweigungen aufweisen, so daß die Büchsen jeweils unterschiedliche Rohrlängen durchlaufen. Mit der Rohrlänge variieren die Druckverluste und damit die für die Transportvorgänge wirksame Antriebskraft.

Sämtliche bisher genannten Parameter können in ihrer Auswirkung auf die Transportvorgänge gesamthaft erfaßt werden, wenn die Beschleunigung ermittelt wird, welche die zu befördernde Büchse bei einem bestimmten Druck der Förderluft erfährt. Sofern die Ermittlung der Beschleunigung auf einer Zeitmessung beruht, muß bekanntlich die Anfangsgeschwindigkeit berücksichtigt werden. Es ist daher von Vorteil, die Beschleunigung aus dem Stillstand zu ermitteln, welche Beschleunigung im folgenden als Startbeschleunigung bezeichnet wird.

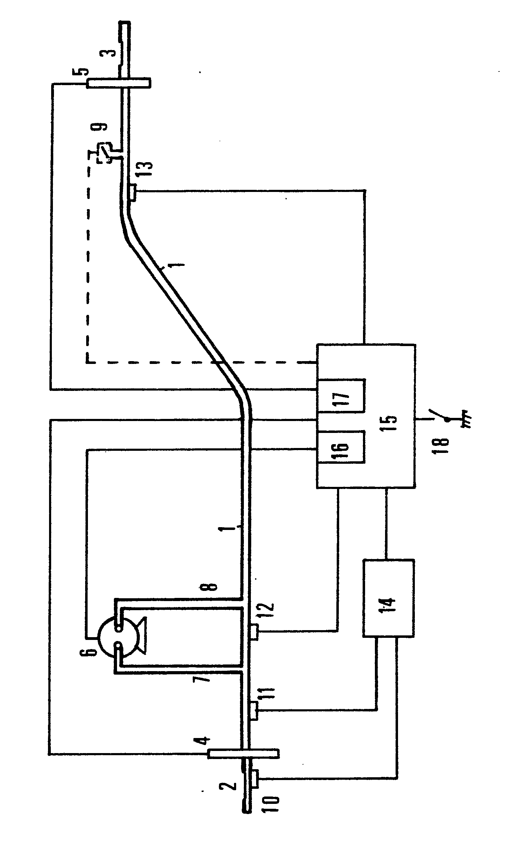

Anhand einer Figur wird nachstehend die Erfindung beispielsweise näher erläutert. In der Figur sind nur die im Zusammenhang mit der Erfindung interessierenden Bestandteile einer Rohrpostanlage dargestellt. Zunächst wird eine Meßanordnung beschrieben, mit welcher die Startbeschleunigung von Rohrpostbüchsen ermittelt werden kann. Diese Meßanordnung ist aus einem mit zwei Büchsendetektoren 10, 11 aufgebauten Meßwertaufnehmer und einer Auswerteschaltung 14 aufgebaut. Die Büchsendetektoren 10, 11 sind in einem bestimmten Abstand voneinander am Fahrrohr 1 angebracht und ändern ihr Ausgangssignal, wenn eine Büchse die Eingabestelle 2 verläßt oder beim Detektor vorbeigleitet. Als Büchsendetektor 10, 11 sind verschiedene Einrichtungen geeignet, z. B. eine durch das Gewicht der Büchse belastete federnde Platte, ein Fahrkontakt, ein Näherungsindikator, ein stromdurchflossener graphithaltiger Weichgummikörper etc. In der Auswerteschaltung 14 wird die Zeit gemessen, welche die Büchse benötigt, um die durch die beiden Büchsendetektoren 10, 11 vorgegebene Strecke zurückzulegen. Am Ausgang der Auswerteschaltung 14 wird ein dem Wert der Beschleunigung entsprechendes Signal abgegeben. Das Signal wird wenigstens bis zum Ausschleusungsvorgang gespeichert und beeinflußt bis dahin sämtliche Transportvorgänge.

Bei der in der Figur dargestellten Rohrpostanlage ist eine Eingabestelle 2 über ein Transportrohr 1 mit einer Ausgabestelle 3 verbunden. Sowohl die Eingabestelle 2 als auch die Ausgabestelle 3, die beide schematisch angedeutet sind, können mit Hilfe einer Schließeinrichtung 4 bzw. 5 vom Transportrohr 1 hermetisch abgetrennt werden. Die Arbeitsluftversorgung erfolgt über zwei Zuleitungen 7, 8 durch ein Gebläse 6. Das Gebläse 6 ist für den Betrieb mit Saug- oder Druckluft gleichermaßen geeignet. Die Steuerung der Arbeitsluft erfolgt über das Gebläse 6 und eventuell über am Transportrohr 1 oder an den Zuleitungen 7, 8 vorhandene Ventile. Vor der Ausgabestelle 3 kann ein steuerbares Ventil 9 vorgesehen werden, durch welches die von der Büchse während des Transportvorganges verschobene Luft entweichen kann. Eine Steuereinrichtung 15 regelt in einem Arbeitsluftsteuerteil 16 die Arbeitsluftversorgung. Im Zeitglieder aufweisenden Teil 17 dieser Steuereinrichtung 15 wird das Öffnen und Schließen der empfangsseitigen Schließeinrichtung 5 sowie durch nicht weiter dargestellte Steuermittel die Betätigung der sendeseitigen Schließeinrichtung 4 veranlaßt. Ein Startsignal erfolgt durch die Betätigung des Startschalters 18. Zur Messung der Startbeschleunigung sind sendeseitig zwei Büchsendetektoren 10, 11, die ein Ab- oder Vorbeifahren einer Rohrpostbüchse signalisieren, über eine Auswerteschaltung 14 mit der Steuereinrichtung 15 verbunden. Der erste Büchsendetektor 10 befindet sich möglichst nahe bei der Eingabestelle 2, damit eine die Messung verfälschende Anfangsgeschwindigkeit der Büchse vermieden wird. Der zweite Büchsendetektor 11 befindet sich innerhalb der Anfahrstrecke, d. h. in demjenigen Rohrabschnitt, in welchem die Büchse mit Sicherheit noch gleichmäßig beschleunigt wird. Ein weiterer Büchsendetektor 12 befindet sich vor der Einmündung der Zuleitung 8 und ist mit der Steuereinrichtung 15 verbunden. Und schließlich ist ein vor der empfangsseitigen Schließeinrichtung 5 vorgesehener Büchsendetektor 13 mit der Steuereinrichtung 15 verbunden.

Für eine zu transportierende Büchse können folgende Phasen unterschieden werden: Ruhephase, Startphase, Transportphase, Brems- und Ausschleusungsphase. In der Ruhephase befindet sich die Rohrpostbüchse in der Eingabestelle 2. Die Schließeinrichtungen 4, 5 und das eventuell vorhandene steuerbare Ventil 9 sind geschlossen. Die Startphase wird jeweils durch ein Startsignal eingeleitet. An der Eingabestelle 2 wird die Schließvorrichtung 4 geöffnet und Saugluft durch die Zuleitung 8 abgezogen. Dadurch erfährt die Büchse eine Startbeschleunigung, die mit Hilfe der Meßanordnung 10, 11, 14 ermittelt wird. Sobald die Büchse in den Bereich des vor der Zuleitung 8 angebrachten Büchsendetektors 12 gelangt, wird die Saugluft der Zuleitung 8 abgestellt, die Schließeinrichtung 4 an der Eingabestelle 2 geschlossen und Druckluft durch die Zuleitung 7 eingelassen. Gleichzeitig wird das steuerbare Ventil 9 oder die empfangsseitige Schließeinrichtung 5 geöffnet. Die Verwendung eines Ventils 9 hat den Vorteil, daß die vor der Büchse verschobene Luft diskret abgeleitet werden kann, während ein Austritt durch die empfangsseitige Schließeinrichtung 5 im Bereiche der Ausgabestelle 3 Luftströme und durch diese verursachte Fahrgeräusche zur Folge hat. Sobald die Büchse den zweiten Meßdetektor 11 erreicht hat, setzt die eigentliche Transportphase ein. Der Druck der Förderluft, der bei der Messung für alle Büchsen gleich groß war, kann nun aufgrund des in der Auswerteschaltung gespeicherten, der Startbeschleunigung entsprechenden Wertes optimal eingestellt werden.

In der Bremsphase, die durch das Vorbeigleiten der Büchse am Detektor 13 oder mittels eines in der Figur nicht dargestellten Zeitgliedes eingeleitet werden kann, ist — falls ein Ventil 9 vorhanden ist — die Schließeinrichtung 5 geschlossen. Wenn die Büchse die zum Ventil 9 führende Abzweigung passiert hat, kann die von der Büchse vorgetriebene Luft nicht mehr entweichen. Die zwischen der Büchse und der Schließeinrichtung 5 befindliche Luftsäule wird komprimiert und erzeugt eine der Bewegung entgegengerichtete Kraft, bis die Büchse zum Stillstand kommt. Dieser Vorgang wird als pneumatische Abbremsung bezeichnet. Ist kein Ventil 9 vorhanden, wird die Schließeinrichtung durch den Detektor 13 bzw. das Zeitglied zunächst geschlossen. Auf einen Impuls des Detektors 13 bzw. des Zeitgliedes wird unter Berücksichtigung der Startbeschleunigung der Druck der Förderluft auf einen Wert eingestellt, der eine mit der gewünschten Geschwindigkeit erfolgende Ausschleusung der Büchse gewährleistet.

Da der Ausschleusungsdruck normalerweise kleiner ist als der Druck vor der Bremsphase, ist in der Regel eine Druckreduktion erforderlich, welche auf verschiedene Weise erfolgen kann. Einmal kann die Gebläseeinrichtung 6 einfach abgeschaltet und der Zeitpunkt abgewartet werden, bis der Druck für die gewünschte Austrittsgeschwindigkeit erreicht ist. Sobald dies der Fall ist, wird, da der Vorgang der pneumatischen Abbremsung in der Regel rascher abläuft, die Schließeinrichtung 5 geöffnet. Der Auslaufvorgang des Gebläses 6 kann einige Zeit in Anspruch nehmen, insbesondere wenn große Druckreduktionen erforderlich sind, wie beispielsweise bei leichten Büchsen mit neuen Gleitringen. Das gleiche Problem stellt sich auch, wenn die Gebläseeinrichtung 6 nicht ganz abgeschaltet wird, sondern mit reduzierter Förderleistung weiterläuft. In solchen Fällen kann die Einstellzeit mit Hilfe einer Bremsung des Gebläsemotors reduziert werden. Oder es können zur Reduktion des Förderluftdruckes bzw. Soges an den Zuleitungen verstellbare Ventileinrichtungen vorgesehen werden.

Nach einer bestimmten Zeit, während deren Ablauf der in Ausschleusungsrichtung auf die Büchse einwirkende Druck eingestellt und die Büchse mit Sicherheit zum Stillstand gekommen ist, setzt die Ausschleusungsphase ein und die Schließeinrichtung 5 wird geöffnet. Dadurch kann die vor der Büchse befindliche Luft wieder entweichen. Die Büche gleitet mit vorbestimmter Geschwindigkeit an einen gewünschten Ort in der Ausgabestelle 3, ohne daß eine Puffereinrichtung unbedingt erforderlich wäre. Sofern ein steuerbares Ventil 9 vorgesehen ist, bleibt die Schließeinrichtung 5 während der Transportphase geschlossen. Das bremsende Luftpolster wird gebildet, sobald die Büchse am Ventil 9 vorbeigekommen ist und die von ihr vorgetriebene Luft nicht mehr entweichen kann. Der Büchsendetektor 13 und ein Verzögerungszeitglied 17 sorgen dafür, daß der in Auschleusungsrichtung auf die Büchse einwirkende Druck eingestellt und die Schließeinrichtung 5 zur Ausschleusung geöffnet wird.

Die gezeigte Anlage ist grundsätzlich auch für Wendebetrieb geeignet. Der Rückbetrieb erfolgt mit Hilfe von durch die Zuleitung 7 angesogener Saugluft. Die Schließeinrichtung 4 bleibt während des Saugluftbetriebes geschlossen, so daß die Fahrgeräusche bei der Ausgabestelle 2 stark gedämpft sind. Durch die Schließeinrichtung 5 oder — um bei der Eingabestelle eine Dämpfung der Fahrgeräusche zu erreichen — durch ein steuerbares Ventil 9 strömt Frischluft nach. Zur Ermittlung der Startbeschleunigung können auf der Eingabeseite zwei weitere Büchsendetektoren vorgesehen werden. Nach dem Vorbeigleiten der Büchse an der Anschlußstelle der Zuleitung 7 wird die von ihr vorgetriebene Luft ein Luftpolster gebildet. Sofern sich die genannte Anschlußstelle genügend nahe bei der Ausgabestelle befindet, kann dieses Luftpolster zur Abbremsung der Büchse verwendet und durch einen am Fahrrohr angebrachten Büchsendetektor oder ein Zeitglied der Ausschleusungsvorgang eingeleitet werden. Der durch die Zuleitung erfolgende Saugluftbetrieb wird dabei unterbrochen und durch die Zuleitung 8 Druckluft zur Ausschleusung eingelassen. Befindet sich die Anschlußstelle der Zuleitung 7 in einer so großen Entfernung zur Ausgabestelle 2, daß eine Abbremsung der Büchse noch nicht zweckmäßig wäre, wird die empfangsseitige Schließeinrichtung 4 oder ein weiteres steuerbares Ventil (analog zum Ventil 9 bei Hinbetrieb) geöffnet, so daß die von der Büchse vorgetriebene Luft entweichen kann. Die Brems- und Ausschleusungsvorgänge erfolgen in gleicher Weise, wie es für den Hinbetrieb beschrieben worden ist.

Es ist ein großer Vorteil der Erfindung, daß zur Ermittlung der Startbeschleunigung in der Regel zum Teil bereits vorhandene Einrichtungen mitverwendet werden können. Häufig ist nämlich in den Ein-/Ausgabestellen ein Büchsendetektor 10 vorgesehen, der mit der Steuereinrichtung derart verknüpft ist, daß die Anlage nicht in Betrieb genommen werden kann, falls in der Eingabestelle keine Büchse vorhanden oder bei der Ausgabestelle eine bereits beförderte Büchse noch nicht entnommen worden ist. Dieser Büchsendetektor kann zum Starten der Zeitmeßeinrichtung eingesetzt werden. Zum Anhalten der Zeitmeßeinrichtung kann jeweils der Büchsendetektor 13 verwendet werden, der bei in entgegengesetzter Richtung erfolgendem Betrieb des Ausschleusungsvorgang einleitet.

In die erfindungsgemäße Ermittlung der Startbeschleunigung gehen auch rohrspezifische Daten ein. Es gibt Rohrpostanlagen, bei welchen ein weitverzweigtes System von Fahrrohren mit verschiedenen Ausgabestellen vorhanden ist und der gewünschte Transportweg mit Hilfe von Weichen eingestellt werden kann. Sofern der Transportweg schon vor Aufnahme des Fördervorganges eingestellt ist, wird die jeweilige Rohrlänge mit den resultierenden Druckverlusten bei der Ermittlung der Startbeschleunigung erfaßt. Jedoch kann ein rohrspezifischer Parameter in den verschiedenen Abschnitten eines Transportweges unterschiedliche Werte aufweisen. Beispielsweise kann sich die Neigung des Fahrrohres von Abschnitt zu Abschnitt ändern. Beim Umstellen einer Weiche oder bei einem Umschalten der Zufuhr der Förderluft, etwa beim Wechsel von Saugluft- auf Druckluftbetrieb, ändern sich die Verhältnisse hinsichtlich des Fahrrohr und Zuleitungen erfassenden Wirkungsbereiches der Förderluft. Daraus resultieren auch Änderungen der Druckverluste. In solchen Fällen kann es daher zweckmäßig sein, die Startbeschleunigung abschnittsweise neu zu ermitteln. Dazu muß die Büchse jeweils angehalten werden.

Im Gegensatz zu den büchsenspezifischen Daten, die durch die jeweils zu transportierende Büchse gegeben sind, bleiben die rohrspezifischen Daten bei einer einmal installierten Anlage in der Regel unverändert. Anstatt die Startbeschleunigung für jeden Abschnitt immer wieder neu zu ermitteln, ist es vorteilhaft, die rohrspezifischen Daten für die einzelnen Rohrabschnitte oder die möglichen Wirkungsbereiche der Förderluft in einem Speicher ein für allemal zu erfassen, um sie im Bedarfsfalle abrufen zu können. Es kann beispielsweise am Anfang eines geneigten Rohrabschnittes ein Büchsendetektor angebracht werden. Beim Vorbeigleiten einer Büchse an diesem Detektor kann aufgrund einer im erwähnten Speicher vorliegenden, die Neigung des Rohres betreffenden Information eine Erhöhung bzw. eine Reduktion der Förderleistung veranlaßt werden. In gleicher Weise kann beim Umstellen einer Weiche die Förderluft aufgrund einer ebenfalls eingespeicherten, den eingestellten Transportweg betreffenden Information angepaßt werden.

Eine weitere Möglichkeit besteht darin, mit je zwei in einzelnen Fahrrohrabschnitten vorhandenen Büchsendetektoren und mit Hilfe einer eine Zeitmeßeinrichtung enthaltenden Auswerteschaltung die Geschwindigkeit einer vorbeigleitenden Büchse zu erfassen und mit einem aus einem Speicher abgerufenen Sollwert zu vergleichen. Aufgrund des Vergleiches wird die Förderleistung so eingestellt, daß eine für den betreffenden Rohrabschnitt optimale Büchsengeschwindigkeit erreicht wird. Mit Hilfe einer derartigen Anordnung ist es auch möglich, die Anfangsgeschwindigkeit vor einem Beschleunigungsvorgang zu ermitteln und bei einer in beschriebener Weise erfolgenden Beschleunigungsmessung zu berücksichtigen.

**Patentansprüche**

1. Rohrpostanlage mit einer Steuereinrichtung (15), die abhängig von auf die Büchse bezogenen Meßwerten die Förderluftversorgung derart regelt, daß eine für die Büchse im jeweiligen Streckenabschnitt vorgegebene Geschwindigkeit bzw. Geschwindigkeiten möglichst eingehalten wird bzw. werden, dadurch gekennzeichnet, daß im Bereich des Rohrsystems (1) jeweils vor dem Streckenabschnitt, in dem die Geschwindigkeit geregelt werden soll, ein Meßwertaufnehmer (10, 11) angeordnet ist, der ein von der Geschwindigkeit oder Beschleunigung einer vorbeifahrenden Rohrpostbüchse abhängiges Signal abgibt.

2. Rohrpostanlage nach Anspruch 1, dadurch gekennzeichnet, daß die Meßstelle (10, 11) im Bereiche der Büchsenanfahrstrecke angeordnet ist.

3. Rohrpostanlage nach Anspruch 1 oder 2, dadurch gekennzeichnet, daß zwecks Einleitung der Bremsphase ein vor der Ausgabestelle (3) angeordneter Büchsendetektor (13) oder ein Zeitglied vorgesehen ist, das bzw. der eine Steuereinrichtung (15) auslöst, die einerseits die Förderluftversorgung reduziert und andererseits mit einem das Öffnen einer empfangsseitigen Schließeinrichtung (5) bewirkenden Verzögerungsglied (17) verbunden ist, wobei die Steuereinrichtung (15) abhängig von den gemessenen Geschwindigkeits- oder Beschleunigungswerten die Förderluftversorgung und/oder das Verzögerungszeitglied (17) derart reguliert, daß beim Öffnen der empfangsseitigen Schließeinrichtung (5) die Büchse mit einer vorgegebenen Geschwindigkeit austritt.

4. Rohrpostanlage nach Anspruch 3, dadurch gekennzeichnet, daß das Öffnen der Schließeinrichtung (5) dann erfolgt, wenn die Rohrpostbüchse innerhalb des Rohrsystems (1) im wesentlichen zum Stillstand gekommen ist.

5. Rohrpostanlage nach einem der Ansprüche 1 bis 4, dadurch gekennzeichnet, daß am Streckenabschnitt vor der empfangsseitigen Schließeinrichtung (5) ein steuerbares Ventil (9) angeordnet ist.

6. Rohrpostanlage nach Anspruch 2 und einem der Ansprüche 3 bis 5, dadurch gekennzeichnet, daß ein Speicher vorgesehen ist, in dem für einzelne Streckenabschnitte charakteristische Daten gespeichert sind, die beim Eintreffen der Büchse im jeweiligen Streckenabschnitt zur optimalen Einstellung der Förderluftversorgung mit herangezogen werden.

7. Rohrpostanlage nach Anspruch 1 bis 6, dadurch gekennzeichnet, daß die Steuereinrichtung (15) derart ausgebildet ist, daß die in sie eingegebene gemessene Geschwindigkeit mit einer in ihr gespeicherten Sollgeschwindigkeit verglichen und die Förderluftversorgung aufgrund eines Vergleiches derart eingestellt wird, daß die Sollgeschwindigkeit möglichst erreicht und eingehalten wird.

**Claims**

1. A pneumatic dispatch system comprising a control device (15) which regulates the conveyor air supply in dependence upon measured values relating to the carrier in such manner as to ensure that a speed or speeds predetermined for the carrier in the section in question is/are adhered to as best possible, characterised in that there is arranged, in the region of the tube system (1) preceding the section in which the speed is to be regulated, a measured value receiver (10, 11) which emits a signal dependent upon the speed or the acceleration of a passing carrier.

2. A pneumatic dispatch system as claimed in Claim 1, characterised in that the measuring station (10, 11) is arranged in the region of the carrier start-up section.

3. A pneumatic dispatch system as claimed in Claim 1 or 2, characterised in that the deceleration phase is initiated by a carrier detector (13) arranged prior to the output station (3), or by a timer provided to trigger a control device (15), which reduces the conveyor air supply and is also connected to a delay timer (17) which serves to open a receiving side closing device (5), where the control device (15) regulates the conveyor air supply and/or the delay timer (17) in dependence upon the measured speed of acceleration values in such manner that when the receiving side closing device (5) opens, the carrier emerges at a given speed.

4. A pneumatic dispatch system as claimed in Claim 3, characterised in that the closing device (5) opens when the carrier has essentially come to a halt within the tube system (1).

5. A pneumatic dispatch system as claimed in one of the Claims 1 to 4, characterised in that a controllable valve (9) is arranged in the section preceding the receiving side closing device (5).

6. A pneumatic dispatch system as claimed in Claim 2 and one of the Claims 3 to 5, characterised in that a store is provided which stores data items characteristic of individual sections contributing to achieve an optimum setting of the conveyor air supply on the arrival of the carrier in the section in question.

7. A pneumatic dispatch system as claimed in Claim 1 to 6, characterised in that the control device (15) is designed in such manner that the measured speed input therein is compared with a predetermined speed stored therein, and as a result of a comparison the conveyor air supply is set to ensure that the predetermined speed is as best as possible achieved and maintained.

**Revendications**

1. Installation pneumatique pour l'acheminement d'objets, avec un dispositif de commande (15) qui règle de telle manière l'alimentation en air servant au transport, en fonction de valeurs de mesure rapportées à la cartouche, que l'on respecte autant que possible la vitesse ou les vitesses prédéterminées pour la cartouche dans la section de voie concernée, caractérisée par le fait qu'il est prévu dans la zone du système tubulaire (1), respectivement avant la section de voie dans laquelle doit être réglée la vitesse, un capteur de valeurs de mesure (10, 11) qui émet un signal qui dépend de la vitesse ou de l'accélération de la cartouche pneumatique qui passe.

2. Installation pneumatique pour l'acheminement d'objets selon la revendication 1, caractérisée par le fait que le poste de mesure (10, 11) est disposé dans la zone de parcours de démarrage de la cartouche.

3. Installation pneumatique pour l'acheminement d'objets selon la revendication 1 ou 2, caractérisée par le fait qu'en vue de faire démarrer la phase de freinage, il est prévu un détecteur de cartouches (13) ou dispositif de temporisation disposé en amont du poste de sortie (3) et déclenchant un dispositif de commande (15) qui d'une part réduit l'alimentation en air servant au transport et qui d'autre part est relié à un dispositif de temporisation à retard (17) qui provoque l'ouverture d'un dispositif de fermeture (5) situé du côté réception, la réalisation étant telle que le dispositif de commande (15) règle, en fonction des valeurs mesurées de la vitesse ou de l'accélération, l'alimentation en air servant au transport et/ou réglé le dispositif de temporisation à retard, de telle manière qu'à l'ouverture du dispositif de fermeture (5) situé du côté réception, la cartouche sort avec une vitesse prédéterminée.

4. Installation pneumatique pour l'acheminement d'objets selon la revendication 3, caractérisée par le fait que l'ouverture du dispositif de fermeture (5) a lieu lorsque la cartouche est amenée sensiblement au repos dans le système tubulaire (1).

5. Installation pneumatique pour l'acheminement d'objets selon l'une des revendications 1 à 4, caractérisée par le fait qu'une soupape (9) susceptible d'être commandée est disposée au niveau de la section de voie, en amont du dispositif de fermeture (5) situé du côté réception.

6. Installation pneumatique pour l'acheminement d'objets selon la revendication 2 et l'une des revendications 3 à 5, caractérisée par le fait qu'il est prévu une mémoire dans laquelle sont mémorisées des données qui sont caractéristiques pour les différentes sections de voie et auxquelles on fait également appel, lors de l'entrée de la cartouche dans la section de voie concernée, pour régler l'alimentation optimale en air d'acheminement.

7. Installation pneumatique pour l'acheminement d'objets selon la revendication 1 à 6, caractérisée par le fait que le dispositif de commande (15) est réalisé de telle manière que la vitesse mesurée et qui y est introduite, est comparée avec une vitesse de consigne qui y est mémorisée, et que l'alimentation en air d'acheminement est réglée, sur la base d'une compraison, de manière que la vitesse de consigne soit, autant que possible, atteinte et maintenue.

0 019 653